# EUROPÄISCHE PATENTSCHRIFT

(11) **EP 1 623 747 B1**
(45) Veröffentlichungstag und Bekanntmachung des Hinweises auf die Patenterteilung: **30.04.2008**
(21) Anmeldenummer: 05014503.6
(22) Anmeldetag: 05.07.2005
(51) Int. Cl.: B01D 29/13, F01L 1/34

(54) **Ringfilter für ringförmige Nuten**
Ringfilter for annular grooves
Filtre annulaire pour des rainures annulaire

(30) Priorität: 30.07.2004 US 592940 P
(43) Veröffentlichungstag der Anmeldung: 08.02.2006
(73) Patentinhaber: Schaeffler KG, 91074 Herzogenaurach (DE)
(72) Erfinder: Heintzen, Dirk, 91085 Weisendorf (DE); Meyer, Roger, 48114 Brighton, MI (US)

(56) Entgegenhaltungen:
- EP-A- 0 491 997
- DE-A1- 2 108 429
- DE-A1- 4 030 859
- DE-C2- 10 027 080
- DE-U1- 20 023 304
- US-A- 4 123 240
- US-A- 5 169 524
- US-A- 5 599 449
- US-A- 5 738 053

## Beschreibung

### Gebiet der Erfindung

Die Erfindung betrifft einen Ringfilter zur Filtration von Druckmittel, mit einem in Umfangsrichtung des Ringfilters umlaufenden Filterabschnitt und einem Rahmen, wobei der Rahmen zumindest aus zwei ersten Rahmenelementen besteht, die die axialen Stirnenden des Filterabschnitts begrenzen und mit diesen verbunden sind.

Es sind Filter zur Filtration von Druck- und Schmiermittel bekannt, die sensible Bauteile einer Maschine die an einen Druck- oder Schmiermittelkreislauf angeschlossen sind vor dem Eintritt von Schmutzpartikeln zusammen mit dem Druck- bzw. Schmiermittel schützen. Derartige Bauteile können beispielsweise hydraulische Spielausgleichselemente, schaltbare Nockenfolger eines Ventiltriebs einer Brennkraftmaschine oder hydraulische Wegeventile, insbesondere Schieberwegeventile, sein. Derartige Maschinenbauteile bestehen aus mehreren gegeneinander bewegten Elementen, die einen geringen Abstand zueinander aufweisen.

Hydraulische Schieberwegeventile bestehen beispielsweise aus einem im Wesentlichen hohlzylindrisch ausgeführten Ventilgehäuse mit mehreren Anschlüssen, in dem ein Steuerkolben axial verschiebbar angeordnet ist. Die Anschlüsse sind als Öffnungen im Ventilgehäuse ausgeführt, durch die Druckmittel in das Gehäuse einströmen oder aus dem Gehäuse herausströmen kann. Die Öffnungen münden meist in Ringnuten, die in der Außenmantelfläche des Ventilgehäuses ausgebildet sind. Die Außenmantelfläche des im Wesentlichen zylindrisch ausgeführten Steuerkolbens ist der Innenmantelfläche des Ventilgehäuses im Wesentlichen angepasst. Weiterhin ist der Steuerkolben mit mehreren axial zueinander beabstandeten Ringnuten versehen, wodurch die Anschlüsse des Wegeventils wahlweise miteinander verbunden oder voneinander getrennt werden können. Treten Schmutzpartikel in das Wegeventil ein so besteht die Gefahr, dass diese zwischen den Steuerkolben und das Ventilgehäuse gelangen und damit zum Verklemmen des Wegeventils führen.

In der DE 100 27 080 C2 und der DE 200 23 304 U1 ist ein derartiges 4/3-Wegeventil (Steuerventil) zur Steuerung eines hydraulischen Nockenwellenverstellers dargestellt. Der Druckmittelanschluss, die Arbeitsanschlüsse und die Tankanschlüsse sind als Ringnuten an der äußeren Mantelfläche des Ventilgehäuses ausgebildet, in deren Nutgründen Öffnungen im Ventilgehäuse ausgebildet sind. Um das Eindringen von Schmutz in das Innere des Wegeventils zu verhindern, ist vorgesehen innerhalb jeder Ringnut einen Ringfilter anzuordnen. Jeder der Ringfilter besteht aus einem Filterabschnitt und einem Rahmen, welcher den Filterabschnitt einschließt. Der Filterabschnitt ist in axialer Richtung zwischen den Rahmenelementen angeordnet und weist im Längsschnitt die Form einer Geraden auf. Die Filter weisen im Wesentlichen einen C-förmigen Querschnitt auf, wobei die zwei offenen Enden des Filters aufeinander zu weisen. Die zwei offenen Enden sind mit formschlüssigen Mitteln versehen, mittels derer der Filter nach dem Einlegen in die Ringnut verschlossen werden kann.

Aus der US 5,599,449 A ist ein ähnlicher Ringfilter bekannt, dessen offene Enden sich im eingebauten Zustand überlappen.

Nachteilig wirkt sich in dieser Ausführungsform die relativ kleine aktive Filterfläche des Ringfilters aus. Sammeln sich während des Betriebs der Brennkraftmaschine Schmutzpartikel im Filterabschnitt an, so wird dessen aktive Filterfläche verringert, was im schlimmsten Fall zum Verstopfen des Filters führen kann. Ein weiterer Nachteil ergibt sich daraus, dass die relativ geringe Filterfläche einen großen Widerstand für das durch sie durchtretende Druckmittel darstellt. Dieser Widerstand erhöht sich wiederum mit dem Verschmutzungsgrad des Filters.

### Zusammenfassung der Erfindung

Der Erfindung liegt daher die Aufgabe zugrunde, diese geschilderten Nachteile zu vermeiden und somit einen Ringfilter zur Filtration von Druckmittel zu schaffen, der eine ausreichend große aktive Filterfläche zur Verfügung stellt, um ein Verstopfen des Filters zu vermeiden und den Druckverlust des durchfließenden Druckmittels möglichst gering zu halten.

Erfindungsgemäß wird die Aufgabe dadurch gelöst, dass die Form des Filterabschnitts im Längsschnitt von einer Geraden abweicht und mindestens ein zweites Rahmenelement vorgesehen ist, das in axialer Richtung zwischen den ersten Rahmenelementen angeordnet und mit dem Filterabschnitt verbunden ist, wobei sich die Rahmenelemente entlang des gesamten Umfangs des Filterabschnitts erstrecken.

Dabei ist vorgesehen, dass der Filterabschnitt im Längsschnitt bogen- oder kreisbogenförmig ausgebildet ist. Ebenso denkbar ist, dass der Filterabschnitt im Längsschnitt n-eckig ausgeführt ist, wobei n > 0. Der Filterabschnitt kann im Längsschnitt konkav oder konvex ausgebildet sein.

Der Ringfilter besteht im Wesentlichen aus einem Filterabschnitt und zumindest zwei ersten Rahmenelementen. Der Filterabschnitt weist zwei offene Enden auf und ist ringförmig gebogen, wobei sich die beiden offenen Enden gegenüberstehen. Die axialen Stirnseiten des ringförmig gebogenen Filterabschnitts werden durch jeweils ein erstes Rahmenelement begrenzt, wobei die Rahmenelemente mit dem Filterabschnitt verbunden sind. Die Rahmenelemente sind ebenso mit zwei offenen Enden versehen, die sich in einem geringen Abstand gegenüberstehen. Die sich gegenüberstehenden offenen Enden des Ringfilters sind mit formschlüssigen Mitteln versehen, die es ermöglichen diese miteinander zu verbinden. Dabei sind die formschlüssigen Mittel derart ausgeführt, dass in geschlossenem Zustand verhindert wird, dass Schmutzpartikel zwischen den offenen Enden hindurchgelangen können.

Der Filterabschnitt weist im Längsschnitt eine von einer Geraden abweichenden Form auf. Bevorzugte Ausführungsformen weisen eine bogenförmige, dreieckige oder n-eckige Form auf. Aufgrund dieser Ausbildung des Filterabschnitts wird die aktive Fläche des Ringfilters signifikant erhöht, wodurch der Durchflusswiderstand des Druckmittels verringert wird. Die deutliche Vergrößerung der aktiven Filterfläche hat weiterhin den Vorteil, dass der Durchfluss von Druckmittel auch dann gewährleistet ist, wenn Teile der Filterfläche mit Schmutzpartikeln bedeckt sind. Eine Ausführung des Ringfilters als selbstreinigender Ringfilter ist somit nicht nötig.

In einer vorteilhaften Weiterbildung der Erfindung ist mindestens ein zweites Rahmenelement vorgesehen, das zwischen den ersten Rahmenelementen angeordnet und mit dem Filterabschnitt verbunden ist.

Das zweite Rahmenelement wirkt sich versteifend auf den Filterabschnitt aus und sorgt dafür, dass dieser während des Betriebs der Brennkraftmaschine seine Querschnittsform und damit seine vergrößerte aktive Filterfläche beibehält. Im Falle von Filterabschnitten in n-eckiger Ausführungsform sind die zweiten Rahmenelemente vorteilhafterweise an den Ecken des Filterabschnitts angeordnet.

Weiterhin sind die ersten Rahmenelemente oder die ersten Rahmenelemente und/oder die ersten und die zweiten Rahmenelemente mit Querstreben verbunden. Diese Querstreben fördern die Formtreue des Ringfilters in axialer Richtung während des Durchflusses von Druckmittel.

Vorteilhafterweise ist der Ringfilter mit zwei offenen Enden ausgeführt, die ringförmig aufeinander zugebogen und mit Befestigungsmitteln, zur Befestigung aneinander, versehen sind. Dadurch wird die Montage des Ringfilters an der gewünschten Stelle vereinfacht, da er in offenem Zustand positioniert werden kann. Anschließend werden die offenen Enden aneinander befestigt.

In einer weiteren erfindungsgemäßen Ausführungsform ist vorgesehen, dass

der Ringfilter innerhalb einer Ringnut einer Drehdurchführung für Druckmittel zwischen einer Nockenwelle und einer an einem Zylinderkopf ausgebildeten Lagerschale, angeordnet ist, wobei die Ringnut in eine Innenmantelfläche der Lagerschale eingebracht ist und mit einer im Zylinderkopf ausgebildeten Druckmittelleitung und mit mindestens einer Öffnung in der Nockenwelle kommuniziert.
Alternativ kann der Ringfilter innerhalb einer Ringnut einer Drehdurchführung für Druckmittel zwischen einer Nockenwelle und einer an einem Zylinderkopf ausgebildeten Lagerschale, angeordnet ist, wobei die Ringnut in die Außenmantelfläche der Nockenwelle eingebracht ist und über mindestens eine Öffnung mit einem Druckmittelkanal in der Nockenwelle und mit einer im Zylinderkopf ausgebildeten Druckmittelleitung kommuniziert.
Vorteilhafterweise kann ein Ringfilter nach einer der vorher beschriebenen Ausführungsformen ausgebildet sein.

Derartige Ringfilter sind für den Einsatz innerhalb von Ringnuten vorgesehen, die eine Druckmittelübertragung von einem ersten Maschinenteil auf ein zweites Maschinenteil ermöglichen. Als Beispiel ist hier die Drehdurchführung innerhalb einer Nockenwellenlagerung von einem als Nockenwellenlager ausgeführten Nabenteil auf eine darin gelagerte Nockenwelle angeführt.

In einer ersten Konfiguration der Nockenwellenlagerung sind in das Nabenteil Bohrungen eingebracht, die mit einer in die Innenmantelfläche des Nabenteils eingebrachte Ringnut und von dort mit im Wesentlichen radial verlaufenden Bohrungen in der Nockenwelle kommunizieren. In einer zweiten Konfiguration kommunizieren Bohrungen des Nabenteils mit einer in die Außenmantelfläche der Nockenwelle eingebrachten Ringnut und über diese mit im Wesentlichen radial verlaufenden Bohrungen in der Nockenwelle. In beiden Fällen wird der Ringfilter im geöffneten Zustand in die Ringnut eingelegt. In einer ersten Ausführungsform des Ringfilters, in der die sich gegenüberstehenden offenen Enden mit formschlüssigen Mitteln versehen sind, werden die offenen Enden über die formschlüssige Mittel aneinander befestigt. In einer zweiten Ausführungsform, in der keine formschlüssigen Mittel vorgesehen sind, überlappen sich die offenen Enden der Ringfilter in Umfangsrichtung. In beiden Fällen ist der Ringfilter derart ausgeführt, dass keine Schmutzpartikel zwischen den offenen Enden des Ringfilters hindurchdringen können.

Der Ringfilter ist derart ausgebildet, dass im geschlossenen Zustand eine Vorspannung derart wirkt, dass die ersten Rahmenelemente fest an der Nockenwelle oder der Nabe anliegen. Dadurch wird verhindert, dass Druckmittel am Filterabschnitt vorbei, zwischen den Rahmenelementen und dem angrenzenden Bauteil fließt. Je nachdem an welchem Bauteil die ersten Rahmenelemente anliegen ist der Filterabschnitt im Längsschnitt gesehen konkav oder konvex ausgebildet.
Nockenwellen weisen im Allgemeinen einen größeren Durchmesser als das Ventilgehäuse eines Steuerventils auf. Deshalb weist ein in der Nockenwellenlagerung angebrachter Ringfilter ebenso einen größeren Durchmesser und damit eine größere aktive Filterfläche auf. Dadurch wird der Durchflusswiderstand beim Durchtritt des Druckmittels durch den Filterabschnitt und die Gefahr des Verstopfen des Filters gesenkt. Die aktive Filterfläche kann weiterhin durch den Einsatz eines Ringfilters, dessen Filterabschnitt im Längsschnitt von der Form einer Geraden abweicht, erhöht werden.

### Kurze Beschreibung der Zeichnungen

Weitere Merkmale der Erfindung ergeben sich aus der nachfolgenden Beschreibung und aus den Zeichnungen, in der Ausführungsbeispiele der Erfindung vereinfacht dargestellt sind. Es zeigen:
- Figur 1a: eine perspektivische Ansicht einer ersten Ausführungsform eines erfindungsgemäßen Ringfilters,
- Figur 1b: eine perspektivische Ansicht einer zweiten Ausführungsform eines erfindungsgemäßen Ringfilters,
- Figuren 2a bis 2c: beispielhaft drei Ausführungsformen des Filterabschnitts der erfindungsgemäßen Ringfilter als Prinzipskizze,
- Figur 3: eine Vorrichtung zur Veränderung der Steuerzeiten einer Brennkraftmaschine, die an einer Nockenwelle befestigt ist, welche in einem Zylinderkopf gelagert ist mit einer Drehdurchführung für Druckmittel zwischen dem Zylinderkopf und der Nockenwelle, wobei in der Drehdurchführung ein erfindungsgemäßer Ringfilter integriert ist.

### Ausführliche Beschreibung der Zeichnungen

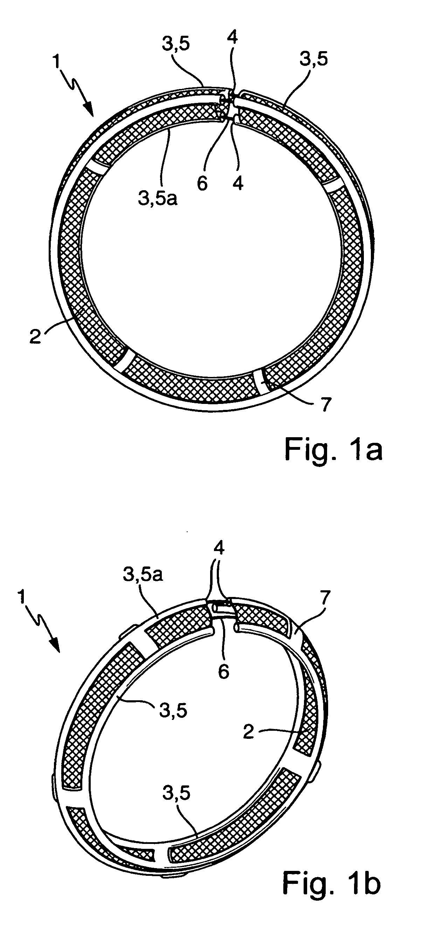

In Figur 1 a ist mit 1 ein erfindungsgemäßer Ringfilter bezeichnet. Der Ringfilter 1 besteht aus einem Filterabschnitt 2 und einem Rahmen 3. Der Filterabschnitt kann als Filtersieb oder Siebblech ausgeführt sein. Sowohl der Filterabschnitt 2 als auch der Rahmen 3 sind mit offenen Enden 4 versehen, wobei der Filterabschnitt 2 und der Rahmen 3 kreisförmig gebogen ist, so dass die offenen Enden 4 sich gegenüberstehen. Der Rahmen 3 besteht aus zwei ersten Rahmenelementen 5 und einem zweiten Rahmenelement 5a. Jeweils ein erstes Rahmenelement 5 ist an einer axialen Stirnseite des Filterabschnitts 2 angeordnet und entlang des gesamten Umfangs des Filterabschnitts mit diesem verbunden. In der dargestellten Ausführungsform sind die offenen Enden 4 mit Befestigungsmitteln 6 versehen, so dass die Enden 4 aneinander befestigt werden können. Die Befestigungsmittel sind derart ausgeführt, dass die Enden 4 im geschlossenen Zustand des Ringfilters 1 fest aneinander anliegen und kein Druckmittel zwischen den Enden 4 durchfließen kann.
Alternativ zu der Ausführung mit Befestigungsmitteln kann vorgesehen sein, dass sich die Enden 4 im eingebauten Zustand des Ringfilters 1 überlappen. Somit ist sichergestellt, dass das Druckmittel nicht zwischen den Enden 4 am Filterabschnitt 2 vorbei fließt.

Der Filterabschnitt 2 ist im Querschnitt bogenförmig ausgebildet. Er erstreckt sich bogenförmig zwischen den ersten Rahmenelementen 5, wobei sich der Bogen in Richtung des Mittelpunkts des Ringfilters 1 erstreckt. Die im Längsschnitt gesehen von der Geraden abweichenden Form des Filterabschnitts 2 hat eine signifikante Vergrößerung der aktiven Filterfläche zur Folge. Folglich sinkt der Durchflusswiderstand, den das Druckmittel beim Durchtritt durch den erfindungsgemäßen Ringfilter 1 erfährt im Vergleich zu dem im Stand der Technik beschriebenen Ringfilter. Weiterhin wird durch die vergrößerte effektive Filterfläche die Gefahr des Verstopfens des Ringfilters 1 verringert. Folglich muss der Ringfilter 1 nicht als selbstreinigender Ringfilter ausgelegt sein.

Um die bogenförmige Form des Ringfilters 1 während des Durchflusses von Druckmittel zu gewährleisten ist ein zweites Rahmenelement 5a vorgesehen, welches in axialer Richtung zwischen den beiden ersten Rahmenelementen 5 angeordnet und mit dem Filterabschnitt 2 verbunden ist. Das zweite Rahmenelement 5a ist wie die ersten Rahmenelemente 5 als steifes aber dennoch biegsames Bauteil ausgeführt und erstreckt sich entlang des gesamten Umfangs des Filterabschnitts 2. Durch die feste Verbindung des zweiten Rahmenelements 5a mit dem Filterabschnitt 2, wobei der Radius des zweiten Rahmenelements 5a an den Radius des Filterabschnitts 2 angepasst ist, ist gewährleistet, dass die im Längsschnitt von der Gerade abweichende Form des Filterabschnitts 2 auch während des Durchflusses von Druckmittel durch den Ringfilter 1 erhalten bleibt.

Weiterhin sind Querstreben 7 zwischen den ersten Rahmenelementen 5 und dem zweiten Rahmenelement 5a vorgesehen. Diese verhindern, dass der Ringfilter 1 während der Montage oder beim Durchfluss von Druckmittel in axialer Richtung gestaucht wird.

Der dargestellte Ringfilter 1 ist für den Einsatz an einer inneren Zylindermantelfläche einer Bohrung eines Maschinenelements oder einer darin ausgebildeten Ringnut vorgesehen. Die ersten Rahmenelemente 5 sind derart mit einer nach außen gerichteten Vorspannung ausgelegt, dass sie in montiertem Zustand druckdicht an der Zylindermantelfläche oder am Nutgrund der Ringnut anliegen. Den Ringfilter 1 anströmendes Druckmittel wird dadurch daran gehindert am Filterabschnitt 2 vorbei zwischen den ersten Rahmenelementen 5 und dem Maschinenelements zu fließen.

Figur 1b zeigt eine weitere Ausführungsform eines erfindungsgemäßen Ringfilters 1. Dieser ist nahezu identisch zu dem in Figur 1 a dargestellten Ringfilter 1 ausgebildet, weshalb für gleiche Komponenten die gleichen Bezugszahlen benutzt werden. Der Filterabschnitt 2 ist wiederum im Längsschnitt gesehen bogenförmig ausgebildet. Im Gegensatz zu dem in Figur 1 a dargestellten Ringfilter 1 erstreckt sich der bogenförmige Filterabschnitt 2 vom Mittelpunkt des Ringfilters 1 weg. Die ersten und zweiten Rahmenelemente 5, 5a sind in diesem Fall derart ausgelegt, dass sie im montierten Zustand zum Mittelpunkt hin vorgespannt sind. Dadurch ist ein druckdichtes Anliegen der ersten Rahmenelemente 5 an einem wellenartigen Bauteil gewährleistet.

Neben den Varianten, in denen der Filterabschnitt 2 im Längsschnitt gesehen bogenförmig ausgeführt ist, sind alle von der Geraden abweichende Formen möglich, beispielsweise kreisbogenförmig, ellipsenförmig, dreieckig, viereckig oder n-eckig mit n > 2.

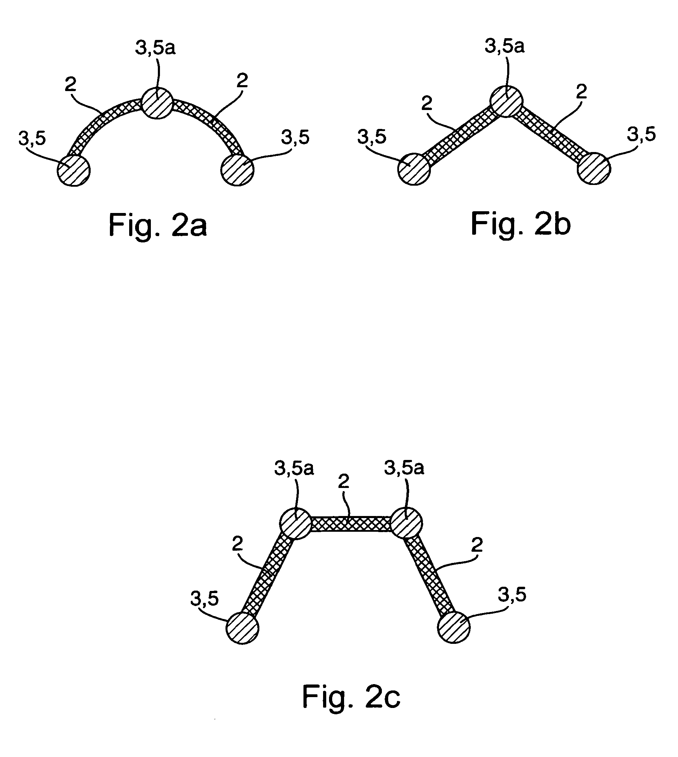

Figuren 2a bis 2c zeigen in einer Prinzipdarstellung drei mögliche Ausführungsformen. Figur 2a zeigt die in den Figuren 1 a und 1 b dargestellte Ausführungsform. Der Filterabschnitt 2 ist kreisbogenförmig ausgeführt und mit den ersten und zweiten Rahmenelementen 5, 5a verbunden. Figur 2b zeigt eine dreieckige Ausführungsform und Figur 2c eine viereckige. Weiterhin können diese Ausführungsformen konvex oder konkav ausgebildet sein, also sich in Richtung des Mittelpunkts des Ringfilters 1 erstrecken oder davon weg.

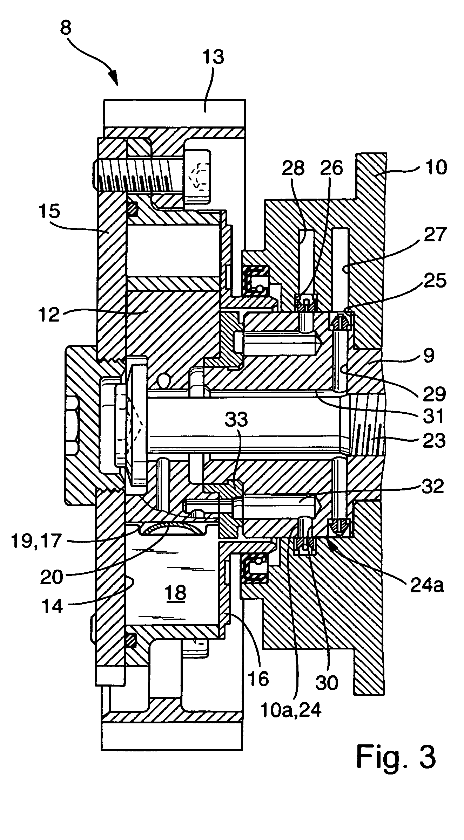

Figur 3 zeigt einen Längsschnitt einer Vorrichtung 8 zur Verstellung der Steuerzeiten einer Brennkraftmaschine, die an einer Nockenwelle 9 befestigt ist. Die Nockenwelle 9 ist in einer Lagerschale 10a eines Zylinderkopfs 10 gelagert. Am antriebsseitigen Ende der Nockenwelle 9 ist die Vorrichtung 8 angeordnet. Die Vorrichtung 8 besteht im Wesentlichen aus einem Stator 11 und einem konzentrisch dazu angeordneten Abtriebsteil 12. Ein Antriebsrad 13 ist drehfest mit dem Stator 11 verbunden und in der dargestellten Ausführungsform als Riemenrad ausgeführt. Der Stator 11 ist drehbar auf dem Abtriebsteil 12 gelagert, wobei an der Innenmantelfläche des Stators 11 mehrere in Umfangsrichtung beabstandete Ausnehmungen 14 vorgesehen sind. Die Ausnehmungen 14 werden in radialer Richtung vom Stator 11 und dem Abtriebsteil 12, in Umfangsrichtung von zwei nicht dargestellten Seitenwänden des Stators 11 und in axialer Richtung durch einen ersten und einen zweiten Seitendeckel 15, 16 begrenzt. Jede der Ausnehmungen 14 ist auf diese Weise druckdicht verschlossen.

An der Außenmantelfläche des Abtriebsteils 12 sind axial verlaufende Flügelnuten 17 ausgebildet, wobei in jeder Flügelnut 17 ein sich radial erstreckender Flügel 18 angeordnet ist. In jede Ausnehmung 14 erstreckt sich ein Flügel 18, wobei die Flügel 18 in radialer Richtung am Stator 11 und in axialer Richtung an den Seitendeckeln 15, 16 anliegen. Jeder Flügel 18 unterteilt eine Ausnehmung 14 in zwei gegeneinander arbeitende Druckkammern. Um ein druckdichtes Anliegen der Flügel 18 am Stator 11 zu gewährleisten, sind zwischen den Nutgründen 19 der Flügelnuten 17 und den Flügeln 18 Federelemente 20 angebracht, die den Flügel 18 in radialer Richtung mit einer Kraft beaufschlagen.

Mittels ersten und zweiten Druckmittelleitungen 21, 22 können die ersten und zweiten Druckkammern über ein nicht dargestelltes Steuerventil mit einer nicht dargestellten Druckmittelpumpe oder einem nicht dargestelltem Tank verbunden werden. Dadurch wird ein Stellantrieb ausgebildet, der eine Verdrehung des Stators 11 relativ zum Abtriebsteil 12 ermöglicht. Dabei ist vorgesehen, dass alle ersten Druckkammern mit der Druckmittelpumpe und alle zweiten Druckkammern mit dem Tank verbunden werden bzw. die umgekehrte Konfiguration. Werden die ersten Druckkammern mit der Druckmittelpumpe und die zweiten Druckkammern mit dem Tank verbunden, so dehnen sich die ersten Druckkammern auf Kosten der zweiten Druckkammern aus. Daraus resultiert eine Verschiebung der Flügel 18 in Umfangsrichtung. Durch das Verschieben der Flügel 18 wird das Abtriebsteil 12 relativ zum Stator 11 verdreht.

Das Abtriebsteil 12 ist mittels einer Schraube 23 drehfest mit der Nockenwelle 9 verbunden. Die Nockenwelle 9 ist mittels mehrerer Gleitlager 24, von denen eins dargestellt ist, im Zylinderkopf 10 drehbar gelagert. An der Grenzfläche zwischen Nockenwelle 9 und Zylinderkopf 10 ist im Bereich des Gleitlagers 24 eine Drehdurchführung 24a für Druckmittel ausgebildet. Zu diesem Zweck ist eine erste Ringnut 25 in die Außenmantelfläche der Nockenwelle 9 eingebracht. Weiterhin ist in der Innenmantelfläche der Lagerschale 10a des Zylinderkopfs 10 eine zweite Ringnut ausgebildet. Die erste Ringnut 25 kommuniziert mit einer dritten Druckmittelleitung 27. Die zweite Ringnut mit einer vierten Druckmittelleitungen 28. Die dritte und die vierte Druckmittelleitung 27, 28 sind im Zylinderkopf 10 ausgebildet. Weiterhin kommuniziert die Ringnuten 25, 26 mit einer ersten bzw. zweiten radialen Öffnung 29, 30 der Nockenwelle 9, wobei die Öffnungen 29, 30 in einen ersten bzw. zweiten axiale Druckmittelkanal 31, 32 münden. Der erste Druckmittelkanal 31 kommuniziert mittels eines Druckmitteladapters 33 mit der ersten Druckmittelleitung 21. Der zweite Druckmittelkanal 32 kommuniziert mit der zweiten Druckmittelleitung 22. Druckmittel kann nun über die dritten und vierten Druckmittelleitungen 27, 28, die Ringnuten 25, 26, die Öffnungen 29, 30, die Druckmittelkanäle 31, 32 und die Druckmittelleitungen 21, 22 von einem nicht dargestellten Druckmittelanschluss zu den Druckkammern oder von diesen zu dem Druckmittelanschluss geleitet werden.

Innerhalb der ersten und zweiten Ringnut 25, 26 ist jeweils ein Ringfilter 1 angeordnet. Auf diese Art und Weise wird verhindert, dass Schmutz oder Metallspäne, die sich innerhalb der Vorrichtung 8 befinden, zu einem nicht dargestellten Steuerventil gelangen, welches den Ringnuten 25, 26 Druckmittel zuführt.

Die Ringnuten 25, 26 können in der Innenmantelfläche der Lagerschale 10a oder in der Außenmantelfläche der Nockenwelle 9 ausgebildet sein. Je nach Ausführungsform wird ein Ringfilter 1 mit einem im Längsschnitt konvex oder konkav ausgeführten Filterabschnitt 2 verwendet.

Ebenso denkbar ist eine Ausführungsform, in der innerhalb des Abtriebsteils 12 konzentrisch ein Steuerventil angeordnet ist, welches über eine Ringnut 25, eine Öffnung 29 und einen Druckmittelkanal 31 mit Druckmittel versorgt wird und dieses zu den Druckkammern leitet. In diesem Fall ist vorgesehen, dass innerhalb der Ringnut 25 ein Ringfilter 1 vorgesehen ist. Dieser Ringfilter 1 verhindert das Eindringen von Metallspänen oder anderem Schmutz in das Steuerventil.

Vorteilhafterweise wird ein erfindungsgemäßer Ringfilter 1 genutzt, wobei der Filterabschnitt 2 des Ringfilters 1 eine im Längsschnitt gesehen von der Geraden abweichende Form aufweist. Eine derartige Ausführung des Filterabschnitts vergrößert signifikant die aktive Filterfläche, wodurch der Durchflusswiderstand beim Durchtritt des Druckmittels durch den Ringfilter 1 und die Gefahr des Verstopfens des Ringfilters 1 gesenkt wird.

### Bezugszeichen

- 1: Ringfilter
- 2: Filterabschnitt
- 3: Rahmen
- 4: Ende
- 5: erstes Rahmenelement
- 5a: zweites Rahmenelement
- 6: Befestigungsmittel
- 7: Querstreben
- 8: Vorrichtung
- 9: Nockenwelle
- 10: Zylinderkopf
- 10a: Lagerschale
- 11: Stator
- 12: Abtriebsteil
- 13: Antriebsrad
- 14: Ausnehmung
- 15: erster Seitendeckel
- 16: zweiter Seitendeckel
- 17: Flügelnut
- 18: Flügel
- 19: Nutgrund
- 20: Federelement
- 21: erste Druckmittelleitung
- 22: zweite Druckmittelleitung
- 23: Schraube
- 24: Gleitlager
- 24a: Drehdurchführung
- 25: erste Ringnut
- 26: zweite Ringnut
- 27: dritte Druckmittelleitung
- 28: vierte Druckmittelleitung
- 29: erste Öffnung
- 30: zweite Öffnung
- 31: erster Druckmittelkanal
- 32: zweiter Druckmittelkanal
- 33: Druckmitteladapter

## Patentansprüche

1. Ringfilter (1) zur Filtration von Hydraulikmittel, mit
- einem in Umfangsrichtung des Ringfilters (1) umlaufenden Filterabschnitt (2)
- und einem Rahmen (3),
- wobei der Rahmen (3) zumindest aus zwei ersten Rahmenelementen (5) besteht,
- die die axialen Stirnenden des Filterabschnitts (2) begrenzen
- und mit diesen verbunden sind, **dadurch gekennzeichnet, dass**
- die Form des Filterabschnitts (2) im Längsschnitt von einer Geraden abweicht und mindestens ein zweites Rahmenelement (5a) vorgesehen ist,
das in axialer Richtung zwischen den ersten Rahmenelementen (5) angeordnet und mit dem Filterabschnitt (2) verbunden ist, wobei sich die Rahmenelemente (5, 5a) entlang des gesamten Umfangs des Filterabschnitts (2) erstrecken.

2. Ringfilter (1) nach Anspruch 1, **dadurch gekennzeichnet, dass** der Filterabschnitt (2) im Längsschnitt n-eckig ausgeführt ist, wobei n>0.

3. Ringfilter (1) nach Anspruch 1, **dadurch gekennzeichnet, dass** der Filterabschnitt (2) im Längsschnitt bogenförmig ausgebildet ist.

4. Ringfilter (1) nach Anspruch 1, **dadurch gekennzeichnet, dass** der Filterabschnitt (2) im Längsschnitt kreisbogenförmig ausgebildet ist.

5. Ringfilter (1) nach einem der vorhergehenden Ansprüchen, **dadurch gekennzeichnet, dass** der Filterabschnitt (2) im Längsschnitt konkav ausgebildet ist.

6. Ringfilter (1) nach einem der vorhergehenden Ansprüchen, **dadurch gekennzeichnet, dass** der Filterabschnitt (2) im Längsschnitt konvex ausgebildet ist.

7. Ringfilter (1) nach Anspruch 1, **dadurch gekennzeichnet, dass** die ersten Rahmenelemente (5) und/oder die ersten und die zweiten Rahmenelemente (5, 5a) mit Querstreben (7) verbunden sind.

8. Ringfilter (1) nach Anspruch 1, **dadurch gekennzeichnet, dass** der Ringfilter (1) mit zwei offenen Enden 4 ausgeführt ist, die ringförmig aufeinander zugebogen und mit Befestigungsmitteln (6), zur Befestigung aneinander, versehen sind.

9. Verwendung eines Ring filters, nach einem der Ansprüche 1-8 für eine Drehdurchführung innerhalb einer Nockenwellen lagerung von einem als Nockenwellenlager ausgeführten Nabenteil auf eine darin gelagerte Nockenwelle,
**dadurch gekennzeichnet, dass**
- der Ringfilter (1) innerhalb einer Ringnut (25, 26) einer Drehdurchführung 24a für Druckmittel zwischen einer Nockenwelle (9) und einer an einem Zylinderkopf (10) ausgebildeten Lagerschale (10a), angeordnet ist,
- wobei die Ringnut (25, 26) in eine Innenmantelfläche der Lagerschale (10a) eingebracht ist und
- mit einer im Zylinderkopf (10) ausgebildeten Druckmittelleitung (27, 28) und
- mit mindestens einer Öffnung (29, 30) in der Nockenwelle (9) kommuniziert.

10. Verwendung eines Ringfilters nach einem der Ansprüche 1-8 für eine Drehdurchführung innerhalb einer Nockenwellenlagerung von einem als Nockenwellenlager ausgeführten nabenteil auf eine darin gelagerte Nockenwelle,
**dadurch gekennzeichnet, dass**
- der Ringfilter (1) innerhalb einer Ringnut (25, 26) einer Drehdurchführung 24a für Druckmittel zwischen einer Nockenwelle (9) und einer an einem Zylinderkopf (10) ausgebildeten Lagerschale (10a), angeordnet ist,
- wobei die Ringnut (25, 26) in die Außenmantelfläche der Nockenwelle (9) eingebracht ist und
- über mindestens eine Öffnung (29, 30) mit einem Druckmittelkanal (31, 32) in der Nockenwelle (9) und
- mit einer im Zylinderkopf (10) ausgebildeten Druckmittelleitung (27, 28) kommuniziert.

## Claims

1. Ring filter (1) for the filtration of hydraulic medium, having
- a filter section (2) encircling in the circumferential direction of the ring filter (1),
- and a frame (3),
- the frame (3) comprising at least two first frame elements (5),
- which bound the axial front faces of the filter section (2)
- and are connected thereto, **characterized in that**
- the shape of the filter section (2) in longitudinal section deviates from a straight line and at least one second frame element (5a) is provided, which is arranged in the axial direction between the first frame elements (5) and is connected to the filter section (2), the frame elements (5, 5a) extending along the entire circumference of the filter section (2).

2. Ring filter (1) according to Claim 1, **characterized in that** the filter section (2) is of n-cornered design in longitudinal section, where n > 0.

3. Ring filter (1) according to Claim 1, **characterized in that** the filter section (2) is of arcuate design in longitudinal section.

4. Ring filter (1) according to Claim 1, **characterized in that** the filter section (2) is of circular-arc-shaped design in longitudinal section.

5. Ring filter (1) according to one of the preceding claims, **characterized in that** the filter section (2) is of concave design in longitudinal section.

6. Ring filter (1) according to one of the preceding claims, **characterized in that** the filter section (2) is of convex design in longitudinal section.

7. Ring filter (1) according to Claim 1, **characterized in that** the first frame elements (5) and/or the first and the second frame elements (5, 5a) are connected to cross struts (7).

8. Ring filter (1) according to Claim 1, **characterized in that** the ring filter (1) is designed with two open ends (4) which are bent annularly toward each other and are provided with fastening means (6), for fastening them to each other.

9. Use of a ring filter according to one of Claims 1-8 for a rotary transmission lead through within a camshaft mounting from a hub part designed as a camshaft bearing to a camshaft mounted therein,
**characterized in that**
- the ring filter (1) is arranged within an annular groove (25, 26) in a rotary transmission lead through (24a) for pressure medium between a camshaft (9) and a bearing shell (10a) formed on a cylinder head (10),
- the annular groove (25, 26) being placed into an inner circumferential surface of the bearing shell (10a), and
- communicating with a pressure medium line (27, 28) formed in the cylinder head (10) and
- with at least one opening (29, 30) in the camshaft (9).

10. Use of a ring filter according to one of Claims 1-8 for a rotary transmission lead through within a camshaft mounting from a hub part designed as a camshaft bearing to a camshaft mounted therein,
**characterized in that**
- the ring filter (1) is arranged within an annular groove (25, 26) in a rotary transmission lead through (24a) for pressure medium between a camshaft (9) and a bearing shell (10a) formed on a cylinder head (10),
- the annular groove (25, 26) being placed into the outer circumferential surface of the camshaft (9) and
- communicating via at least one opening (29, 30) with a pressure medium passage (31, 32) in the camshaft (9) and
- with a pressure medium line (27, 28) formed in the cylinder head (10).

## Revendications

1. Filtre annulaire (1) pour la filtration d'agents hydrauliques, avec
- un tronçon de filtre (2) tournant dans le sens périphérique du filtre annulaire (1)
- et un cadre (3),
- le cadre (3) consistant en au moins deux premiers éléments de cadre (5),
- qui délimitent les extrémités frontales axiales du tronçon de filtre (2)
- et qui sont reliés avec ces dernières,
**caractérisé en ce que**
- dans la coupe longitudinale, la forme du tronçon de filtre (2) est différente d'une droite et **en ce qu'**il est prévu au moins un deuxième élément de cadre (5a), qui en direction axiale est disposé entre les premiers éléments de cadre (5) et qui est relié avec le tronçon de filtre (2), les éléments de cadre (5, 5a) s'étendant le long de l'ensemble de la périphérie du tronçon de filtre (2).

2. Filtre annulaire (1) selon la revendication 1, **caractérisé en ce que**, en coupe longitudinale, le tronçon de filtre (2) est conçu en version n-angulaire, n étant > 0.

3. Filtre annulaire (1) selon la revendication 1, **caractérisé en ce que**, en coupe longitudinale, le tronçon de filtre (2) est conçu sous forme cintrée.

4. Filtre annulaire (1) selon la revendication 1, **caractérisé en ce que**, en coupe longitudinale, le tronçon de filtre (2) est conçu sous forme d'arc de cercle.

5. Filtre annulaire (1) selon l'une quelconque des revendications précédentes, **caractérisé en ce que**, en coupe longitudinale, le tronçon de filtre (2) est conçu sous forme concave.

6. Filtre annulaire (1) selon l'une quelconque des revendications précédentes, **caractérisé en ce que**, en coupe longitudinale, le tronçon de filtre (2) est conçu sous forme convexe.

7. Filtre annulaire (1) selon la revendication 1, **caractérisé en ce que** les premiers éléments de cadre (5) et/ou les premiers et les deuxièmes éléments de cadre (5, 5a) sont reliés avec des entretoises (7).

8. Filtre annulaire (1) selon la revendication 1, **caractérisé en ce que** le filtre annulaire (1) est réalisé avec deux extrémités ouvertes (4) qui sont recourbées sous forme annulaire l'une sur l'autre et qui sont munies de moyens de fixation (6) pour la fixation l'une sur l'autre.

9. Utilisation d'un filtre annulaire selon l'une quelconque des revendications 1 à 8 pour un passage tournant au sein d'un logement d'arbre à cames d'un élément de moyeu réalisé sous la forme d'un palier d'arbre à cames sur un arbre à cames logé dans ce dernier, **caractérisée en ce que**
- le filtre annulaire (1) est disposé à l'intérieur d'une rainure annulaire (25, 26) d'un passage tournant 24a pour un agent sous pression entre un arbre à cames (9) et une coquille de coussinet (10a) conçue sur la culasse de cylindre (10),
- la rainure annulaire (25, 26) étant logée dans une surface d'enveloppe intérieure de la coquille de coussinet (10a) et
- communiquant avec un conduit d'agent sous pression (27, 28) conçu dans la culasse de cylindre (10) et
- avec au moins un orifice (29, 30) dans l'arbre à cames (9).

10. Utilisation d'un filtre annulaire selon l'une quelconque des revendications 1 à 8 pour un passage tournant au sein d'un logement d'arbre à cames d'un élément de moyeu réalisé sous la forme d'un palier d'arbre à cames sur un arbre à cames logé dans ce dernier, **caractérisée en ce que**
- le filtre annulaire (1) est disposé à l'intérieur d'une rainure annulaire (25, 26) d'un passage tournant 24a pour un agent sous pression entre un arbre à cames (9) et une coquille de coussinet (10a) conçue sur la culasse de cylindre (10),
- la rainure annulaire (25, 26) étant logée dans une surface d'enveloppe extérieure de l'arbre à cannes (9) et
- communiquant par l'intermédiaire d'au moins un orifice (29, 30) avec un canal d'agent sous pression (31, 32) dans l'arbre à cames (9) et
- avec un conduit d'agent sous pression (27, 28) conçu dans la culasse de cylindre (10).
